# FASCICULE DE BREVET EUROPEEN

(11) **EP 2 735 506 B1**
(45) Date de publication et mention de la délivrance du brevet: **17.12.2014**
(21) Numéro de dépôt: 13005210.3
(22) Date de dépôt: 05.11.2013
(51) Int. Cl.: B64C 25/56, B64D 25/18

(54) **Procédé d'agencement d'un système de flottabilité sur un aéronef, système de flottabilité pour aéronef, et aéronef**
Verfahren zur Anbringung eines Schwimmersystems an einem Flugzeug, Schwimmersystem für ein Flugzeug, und ein Flugzeug
Method of mounting a floatation system on an aircraft, floatation system for an aircraft, and an aircraft

(30) Priorité: 27.11.2012 FR 1203198
(43) Date de publication de la demande: 28.05.2014
(73) Titulaire: Airbus Helicopters, 13725 Marignane Cedex (FR)
(72) Inventeur: Bardy, Alexandre, 13090 Aix en Provence (FR)
(74) Mandataire: GPI & Associés

(56) Documents cités:
- EP-A2- 0 001 607
- FR-A- 1 599 828
- FR-A1- 2 517 620
- US-A- 3 004 737
- US-A- 4 655 415
- US-B2- 7 156 033
- US-B2- 8 079 547

## Description

La présente invention concerne un procédé d'agencement d'un système de flottabilité sur un aéronef, un système de flottabilité pour aéronef, et un aéronef muni d'un système de flottabilité.

Dès lors, l'invention se situe dans le domaine technique des systèmes de flottabilité permettant l'amerrissage et la stabilité à flot d'un aéronef, et plus particulièrement un aéronef à voilure tournante.

Un tel système de flottabilité participe assure la flottaison et la stabilité d'un aéronef lors d'un amerrissage. Le système de flottabilité peut être utilisé notamment lors d'un amerrissage forcé pour permettre l'évacuation des occupants de cet aéronef.

Un système de flottabilité peut comprendre des flotteurs gonflables dont le déploiement est commandé soit par le pilote et/ou le copilote, soit par un déclenchement automatique notamment grâce à un ou des détecteur(s) d'immersion. Ces flotteurs peuvent comprendre des outres gonflées par un moyen de déploiement explosif ou électrique par exemple.

Dès lors, un aéronef peut comprendre un flotteur disposé dans un compartiment. Le compartiment est alors ouvert sur l'extérieur pour permettre le déploiement du flotteur.

Par suite, l'aéronef peut comprendre un moyen de fermeture pour fermer le compartiment en dehors des phases d'amerrissage, en permettant toutefois l'ouverture du compartiment préalablement à un amerrissage pour déployer le flotteur.

Classiquement, un flotteur peut comprendre une enveloppe gonflable pliée dans le volume disponible dans un compartiment.

Selon une première réalisation, le flotteur est fixé à un compartiment d'un aéronef par des sangles par exemple. De plus, le compartiment est fermé par une bâche souple.

Dès lors, lorsque des moyens de gonflage du flotteur sont activés, le volume du flotteur augmente. La bâche étant souple, cette bâche cède sous la pression exercée par le flotteur. Le flotteur se déploie alors pour devenir opérationnel.

Selon une deuxième réalisation plus optimisée d'un point de vue aérodynamique et/ou esthétique, le flotteur est agencé dans un compartiment qui est fermé par un capot semi-rigide ou rigide. Un tel capot semi-rigide ou rigide est dénommé « capot rigide » par la suite. Un capot rigide est donc un capot conservant sa forme dans des conditions normales d'utilisation, contrairement à un capot souple et/ou une bâche souple.

Selon une première variante de la deuxième réalisation, un flotteur gonflable est fixé à l'aéronef par des sangles par exemple, le compartiment étant fermé par un capot éjectable. Le capot peut donc être éjecté pour permettre le déploiement d'un flotteur gonflable. Cependant, cette variante peut engendrer l'éjection préjudiciable d'un capot vers un élément de l'aéronef, ou encore vers une zone habitée. Une telle éjection peut être provoquée par une ouverture intempestive.

Lors du survol d'un plan d'eau, le capot peut aussi être éjecté sur la surface liquide survolée. Dès lors, lors d'un amerrissage, le capot éjecté peut être coincé entre cette surface liquide et l'aéronef. Le capot risque alors d'occasionner des dommages.

Selon une deuxième variante de la deuxième réalisation, un flotteur gonflable est fixé à l'aéronef par des sangles, le compartiment étant fermé par un capot rigide et mobile articulé au fuselage. Le capot est éventuellement une porte fixée au fuselage par une pluralité de charnières.

Le capot peut donc être mis en mouvement pour permettre le déploiement d'un flotteur gonflable. Par exemple, le capot effectue une rotation pour ouvrir le compartiment.

Cette variante est intéressante mais sa mise en oeuvre peut être complexe.

En outre, le capot peut constituer un danger au moment de l'amerrissage en fonction de son emplacement. Un tel capot rigide et mobile sera en effet déplacé sous le choc de l'amerrissage. Dès lors, le capot peut être coincé contre l'aéronef et/ ou le flotteur, et risque donc d'endommager une partie de l'aéronef et/ ou du flotteur.

Selon une troisième variante de la deuxième réalisation, le capot est fixé au flotteur gonflable. Le flotteur gonflable est donc plié puis collé ou attaché au capot. L'ensemble comportant le flotteur et le capot est alors inséré dans le compartiment.

Cette troisième variante est intéressante. En effet, lors du déploiement du flotteur, le capot est écarté de l'aéronef. Les risques d'endommager l'aéronef avec le capot sont alors réduits.

Toutefois, le pliage du flotteur risque d'être délicat.

En outre, cette architecture complexifie l'accessibilité au compartiment. Le flotteur gonflable étant contenu dans le capot, l'ouverture du capot pour des raisons de maintenance par exemple est hasardeuse.

Dans ce contexte, il ressort de cet état de la technique que la mise en place d'un flotteur gonflable sur un aéronef n'a rien d'évident en posant de multiples difficultés.

Parmi l'état de la technique on connaît le document US3004737. Ce document présente un capot qui est articulé à un fuselage.

Le document FR1599828 a pour objet un train d'atterrissage pour aéronef. Un boudin gonflable est escamoté dans une enceinte formée par des éléments de recouvrement flexibles.

Le document US8079547 décrit un flotteur de secours combiné à un radeau de secours.

Le document US4655415 dévoile un flotteur de secours attaché au patin d'atterrissage d'un aéronef.

Le document US7156033 présente un avion muni d'un système de flottaison comprenant un capot éjectable.

Le document FR 2517620 décrit un flotteur muni d'un bouclier de protection.

Le document EP 0001607 présente un train d'atterrissage muni d'un flotteur.

La présente invention a alors pour objet de proposer un procédé pour permettre à un aéronef de flotter et visant à mettre en oeuvre un capot de protection.

L'invention vise alors un procédé d'agencement d'un système de flottabilité sur un aéronef, ce système de flottabilité comprenant un flotteur gonflable et un capot. L'aéronef est ainsi muni d'un compartiment destiné à accueillir le flotteur gonflable plié, ce compartiment pouvant être fermé par le capot.

Dès lors, on relie le capot à un compartiment de l'aéronef par au moins un moyen de liaison extensible pour permettre la retenue et le déplacement transversal du capot lors du gonflement du flotteur.

Un moyen de liaison non extensible peut aussi être prévu. Par exemple, le système de flottabilité peut inclure au moins deux moyens de liaisons extensibles, ou encore au moins un moyen de liaison extensible et au moins une liaison non extensible.

On comprend que chaque moyen de liaison peut coopérer avec des côtés différents du capot pour assurer sa fixation à l'aéronef.

On entend par « capot » un carénage muni soit d'une unique plaque, soit d'une pluralité de plaques liées les unes aux autres. Lorsque le capot comprend une pluralité de plaques, deux plaques adjacentes peuvent être liées par au moins un moyen de liaison extensible, voire une liaison fusible.

Chaque moyen de liaison comprend donc un lien souple s'étendant selon une longueur pouvant s'allonger sous l'effet d'un effort de traction. Chaque moyen de liaison peut comprendre une sangle élastique par exemple.

Par conséquent, le capot est attaché à l'aéronef par des moyens de liaison élastiques, et éventuellement des organes fusibles.

Lorsque le flotteur se déploie, le capot demeure attaché à l'aéronef. Ainsi, les problèmes liés à l'éjection d'un capot devraient être évités.

En outre, les moyens de liaison étant extensibles, le capot n'entrave pas le déploiement du flotteur. Au contraire, lorsque le flotteur se gonfle, le capot est poussé par le flotteur puis s'éloigne transversalement du compartiment.

Ainsi, l'invention permet de maintenir un capot à proximité de l'aéronef en limitant les risques d'interférence avec l'aéronef.

De plus, on note que le capot n'a pas besoin d'être collé au flotteur.

Dans ces conditions, la mise en oeuvre d'un capot lié à un compartiment d'un flotteur gonflable par des moyens extensibles s'avère être une solution technique satisfaisante et relativement simple à réaliser.

Ce procédé peut de plus comporter une ou plusieurs des caractéristiques additionnelles qui suivent.

Par suite, on peut fixer le capot à un compartiment par une liaison fusible. La liaison fusible est alors dimensionnée pour céder sous la pression du flotteur lors de son gonflement.

De plus, on peut fixer le capot à chaque moyen de liaison par un moyen de fixation réversible pour permettre le démontage du capot à des fins de maintenance éventuellement.

On verra par la suite que l'on peut fixer par un boulon par exemple le capot à une cornière d'un moyen de liaison, cette cornière étant fixée par un moyen fusible à un compartiment.

Ainsi, le capot est indépendant du flotteur. Le capot ne conditionne pas le pliage du flotteur au sein d'un compartiment.

Un opérateur peut donc plier le flotteur dans un compartiment. Ensuite, cet opérateur peut fermer le compartiment avec le capot.

En outre, le capot peut être démonté pour autoriser une action de maintenance.

On note qu'il est possible de retirer ponctuellement le capot avant un vol spécifique pour réduire la masse de l'aéronef durant le vol notamment. Le compartiment peut alors être obturé à l'aide d'une bâche éventuellement.

Selon un premier mode réalisation, on relie le capot au compartiment par les moyens de liaison.

Selon un deuxième mode de réalisation, on relie le capot au compartiment par les moyens de liaison et le flotteur, le flotteur étant fixé à au moins une paroi interne délimitant le compartiment, le capot étant fixé au flotteur via les moyens de liaison.

Le capot est fixé ponctuellement au flotteur. Dès lors ce deuxième mode de réalisation n'a pas un impact important sur le pliage du flotteur.

Un opérateur plie par exemple le flotteur dans le compartiment, puis fixe le capot aux moyens de liaisons pour obturer le compartiment.

Par ailleurs, le flotteur présentant une fois gonflé une zone inférieure susceptible d'impacter une surface liquide et une zone supérieure qui n'est pas susceptible d'impacter la surface liquide, le capot est agencé en vis-à-vis de la zone supérieure.

On comprend qu'un constructeur peut aisément identifier les parties du flotteur qui baigneront dans un liquide suite à un amerrissage. Le capot et les moyens de liaison sont donc dimensionnés afin de positionner le capot en face d'une zone non immergée suite à un amerrissage.

Ainsi, le capot ne risque pas de détériorer le flotteur en s'interposant entre le flotteur et la surface liquide.

L'invention vise aussi un système de flottabilité mis en oeuvre par ce procédé.

Un tel système de flottabilité pour un aéronef comprend alors un flotteur gonflable et un capot.

Ce système de flottabilité inclut au moins deux moyens de liaison extensibles fixés au capot pour relier ce capot à un compartiment d'un aéronef en permettant la retenue et le déplacement transversal du capot lors du gonflement du flotteur.

Le système de flottabilité peut aussi inclure un moyen de gonflage du flotteur.

Ce système de flottabilité peut de plus comporter une ou plusieurs des caractéristiques qui suivent.

Ainsi, le système de flottabilité peut comporter un moyen de fixation réversible par moyen de liaison pour fixer de manière réversible chaque moyen de liaison au capot.

Par suite, le capot peut être relativement indépendant du flotteur et du compartiment en étant notamment démontable.

Le moyen de liaison réversible peut comprendre une cornière d'une part fixée au capot par un moyen d'encastrement réversible, et d'autre part fixée à un moyen de liaison.

Le moyen d'encastrement réversible peut comprendre un boulon et un écrou qui est solidaire de la cornière par exemple.

Par ailleurs, le moyen de fixation peut comporter un moyen de fixation fusible pour fixer le capot à un compartiment.

Eventuellement, au moins une cornière est fixée de manière réversible au capot et par un organe de fixation fusible à un fuselage d'un aéronef. L'organe de fixation peut par exemple comprendre au moins une goupille fusible.

La cornière peut aussi être fixée à un moyen de liaison élastique pour minimiser le nombre de pièces mécaniques et simplifier le système.

En outre, chaque moyen de liaison comporte selon un premier mode de réalisation un dispositif de fixation pour être fixé à un compartiment d'un aéronef.

Selon un deuxième mode de réalisation, chaque moyen de liaison comporte un système de fixation au flotteur.

Les deux modes de réalisation peuvent être combinés, un capot étant d'une part fixé au fuselage d'un aéronef par au moins un moyen de liaison extensible, et d'autre part au flotteur par au moins un moyen de liaison extensible.

Indépendamment de la réalisation, le flotteur comporte éventuellement un dispositif de liaison pour être lié à un compartiment d'un aéronef.

Enfin, l'invention vise un aéronef muni d'un compartiment et d'un système de flottabilité, cet aéronef comprenant un ou plusieurs flotteurs gonflables agencés dans le compartiment, et un capot obturant ledit compartiment. Ce compartiment peut être de type containeur ou également de type case structurale.

Le système de flottabilité est du type décrit précédemment, le système de flottabilité incluant au moins un moyen de liaison extensible fixé au capot pour relier ce capot audit compartiment en permettant la retenue et le déplacement transversal du capot lors du gonflement du flotteur.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un premier mode de réalisation de l'invention,
- la figure 2, un schéma présentant un deuxième mode de réalisation de l'invention,
- la figure 3, un aéronef muni de flotteurs gonflés,
- la figure 4 une vue présentant un compartiment fermé par un capot,
- la figure 5, un schéma présentant un capot muni d'une cornière de fixation,
- les figures 6 à 7, des schémas explicitant le fonctionnement de l'invention au travers du premier mode de réalisation.

Les éléments présents dans plusieurs figures distinctes sont affectés d'une seule et même référence.

La figure présente un aéronef 1 muni d'un fuselage 2. Ce fuselage 2 comporte notamment une paroi interne 4 délimitant partiellement un compartiment 3. Le compartiment 3 est alors ouvert sur l'extérieur de l'aéronef.

De plus, l'aéronef est pourvu d'au moins un système de flottabilité 10 pour pouvoir reposer sur une surface liquide, au moins temporairement.

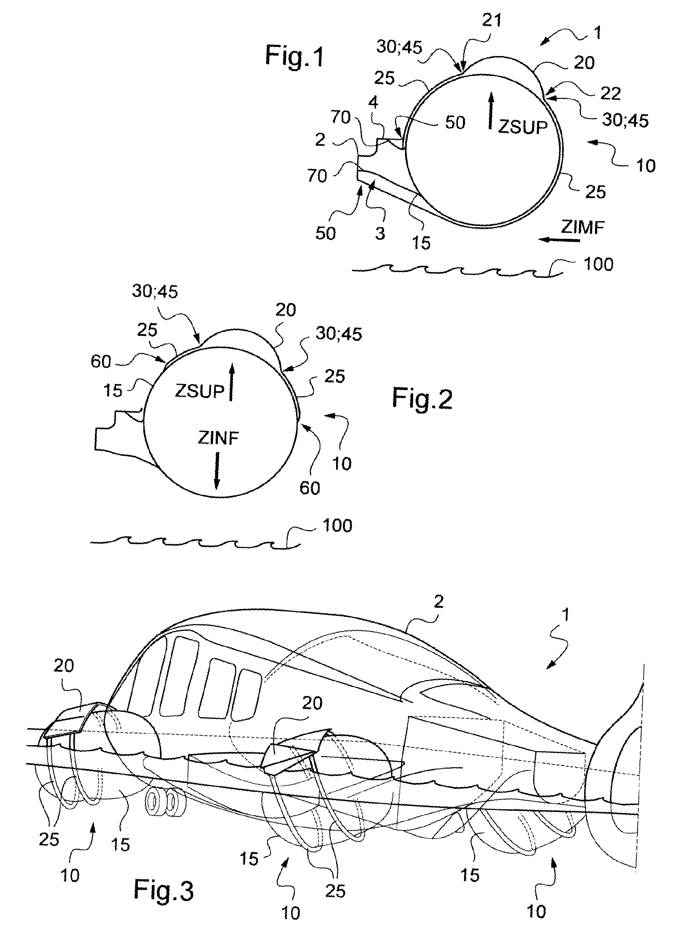

Il est à noter que les autres éléments de l'aéronef ne sont pas représentés sur la figure 1 dans un but de simplification. Par exemple, l'aéronef peut comporter une voilure tournante portée par le fuselage 2.

Le système de flottabilité 10 comprend un flotteur 15 qui est gonflable. Le flotteur 15 est donc pourvu d'une enveloppe pouvant être pliée dans le compartiment 3.

Le flotteur est ainsi fixé au compartiment 3 par un dispositif de liaison 70 usuel. Par exemple, une portion de l'enveloppe du flotteur 15 est collée à une paroi interne 4 du compartiment.

Par ailleurs, le système de flottabilité 10 est muni d'un dispositif de gonflage usuel du flotteur. Lorsque le flotteur est gonflé, ce flotteur saille alors du compartiment 3. La figure 1 présente ainsi un flotteur gonflé.

Pour fermer le compartiment 3 en dehors de phases d'amerrissage, le système de flottabilité 10 comprend un capot 20 apte à obturer ce compartiment 3. Le capot peut servir à des fins esthétiques, voire aérodynamiques.

De plus, le système de flottabilité 10 est muni d'au moins un moyen de liaison 25 extensible. Chaque moyen de liaison 25 est fixé au capot pour relier le capot 20 au compartiment 3, en permettant en outre la retenue et le déplacement transversal du capot 20 lors du gonflement du flotteur 15. De tels moyens de liaison peuvent comprendre des sangles, éventuellement élastiques.

Pour bien maitriser le déplacement du capot, le système de flottabilité comporte au moins deux moyens de liaison fixés à des côtés 21, 22 opposés du capot 20.

Par conséquent, le flotteur 15 et les moyens de liaison 25 sont pliés dans le compartiment durant des conditions normales d'utilisation, à savoir hors amerrissage. Le capot obture alors le compartiment 3.

Par contre, le flotteur 15 est gonflé lors d'un amerrissage. Au lieu d'être éjecté, le capot reste relié au fuselage de l'aéronef par les moyens de liaison 25.

On pourrait penser que le capot va alors entraver le gonflement du flotteur. Toutefois, les moyens de liaison étant extensibles, le capot peut s'éloigner transversalement du fuselage de manière à ne pas entraver le gonflement du flotteur.

Chaque moyen de liaison peut comprendre des sangles élastiques. Cependant, de simples sangles peuvent suffire. En effet, des telles sangles sont extensibles dans la mesure où elles peuvent s'étirer sur une longueur réduite en étant pliées, puis sur une longueur importante en étant dépliées.

Ainsi, selon le procédé mis en oeuvre par l'invention, on relie le capot 20 au compartiment 3 par au moins un moyen de liaison 25 extensible pour permettre la retenue et le déplacement transversal du capot 20 lors du gonflement du flotteur 15. Au moins un autre moyen de liaison extensible ou une liaison non extensible peut être ajouté.

On peut en outre relier le capot 20 à l'aéronef par des systèmes réversibles pour permettre le démontage du capot, et des systèmes fusibles pour permettre l'éloignement du capot 20 lors du gonflement du flotteur.

Par exemple, on fixe le capot 20 à chaque moyen de liaison 25 par un moyen de fixation 30 réversible, tout en prévoyant un organe de fixation 45 fusible pour fixer le capot à l'aéronef. Ces moyens et organes seront explicités par la suite.

Conformément à la variante représentée sur la figure 1, le flotteur 15 présente une fois gonflé une zone inférieure ZINF susceptible d'impacter une surface liquide 100, et une zone supérieure ZSUP qui n'est pas susceptible d'impacter ladite surface liquide 100. Le constructeur peut établir par simulation et/ ou essais ces zones inférieure ZINF et supérieure ZSUP.

Dès lors, le constructeur peut dimensionner l'invention pour agencer le capot 20 en vis-à-vis de la zone supérieure ZSUP lorsque le flotteur est gonflé.

Selon un premier mode de réalisation du procédé de l'invention, on relie le capot 20 directement au compartiment 3 par les moyens de liaison 25.

En référence à la figure 1, le capot 20 est fixé à chaque moyen de liaison 25 par un moyen de fixation 30.

De plus, chaque moyen de liaison 25 est fixé au compartiment 3 par un dispositif de fixation 50.

Dès lors, le capot est fixé au compartiment par les moyens de liaison.

Selon un deuxième mode de réalisation du procédé de l'invention, on relie le capot 20 au compartiment 3 par les moyens de liaison 25 et le flotteur 15. En effet, le flotteur est fixé à au moins une paroi interne 4 délimitant le compartiment 3, le capot 20 étant fixé au flotteur 15 via les moyens de liaison 25.

En référence à la figure 2 explicitant ce deuxième mode de réalisation, le capot 20 est fixé à chaque moyen de liaison 25 par un moyen de fixation 30.

De plus, chaque moyen de liaison 25 est fixé au flotteur 15 par un système de fixation 60, le flotteur 15 étant lui-même fixé au compartiment 3.

La figure 3 présente un aéronef 1 muni d'une pluralité de systèmes de flottabilité 10.

Selon cette variante, chaque système de flottabilité 10 comporte deux paires de moyens de liaison 25 pour retenir un capot 20.

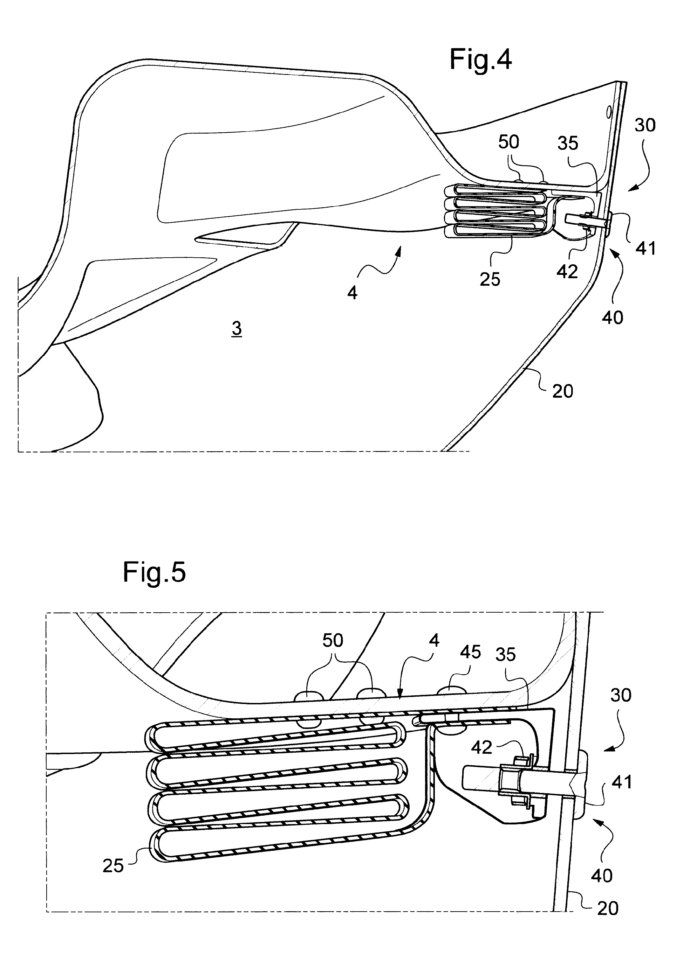

Les figures 4 à 7 explicitent une version de l'invention selon le premier mode de réalisation.

Selon cette version et en référence à la figure 4, un système de flottabilité 10 est muni d'un moyen de fixation 30 comprenant une cornière 35 par moyen de liaison 25.

En référence à la figure 5, la cornière 35 est solidarisée au moyen de liaison 25 par des moyens usuels, tels que des rivets par exemple.

De plus, la cornière est fixée au capot 20. Cette cornière permet donc de fixer le moyen de liaison 25 au capot 20.

Cette fixation peut toutefois être réversible. Dès lors, la cornière est attachée au capot 20 par un moyen d'encastrement 40 réversible. Ce moyen d'encastrement 40 peut comprendre par exemple un écrou 42 solidaire de la cornière, et un boulon 41 ou équivalent. On visse alors le boulon 41 dans l'écrou 42 pour fixer le capot à la cornière, et donc au moyen de liaison 25.

De plus, le capot peut être fixé de manière réversible au compartiment 3.

Ainsi, la cornière 35 peut être attachée au compartiment 3 par un organe de fixation fusible.

Dès lors, un opérateur plie un flotteur dans le compartiment 3.

L'opérateur fixe de plus la cornière à une paroi interne 4 à l'aide d'un organe de fixation fusible, tel qu'une goupille ou un rivet dimensionné pour céder à compter d'un effort donné.

En outre, la cornière est fixée à une première extrémité d'un moyen de liaison 25. La deuxième extrémité du moyen de liaison 25 est alors fixée au compartiment selon le premier mode de réalisation.

Selon le deuxième mode de réalisation, cette deuxième extrémité est solidarisée à un flotteur.

Le moyen de liaison peut alors être plié.

Cet opérateur peut enfin fermer le compartiment à l'aide du capot et du moyen d'encastrement 40.

Pour accéder au compartiment à des fins de maintenance par exemple, l'opérateur peut dévisser le moyen d'encastrement 40 pour enlever le capot 20.

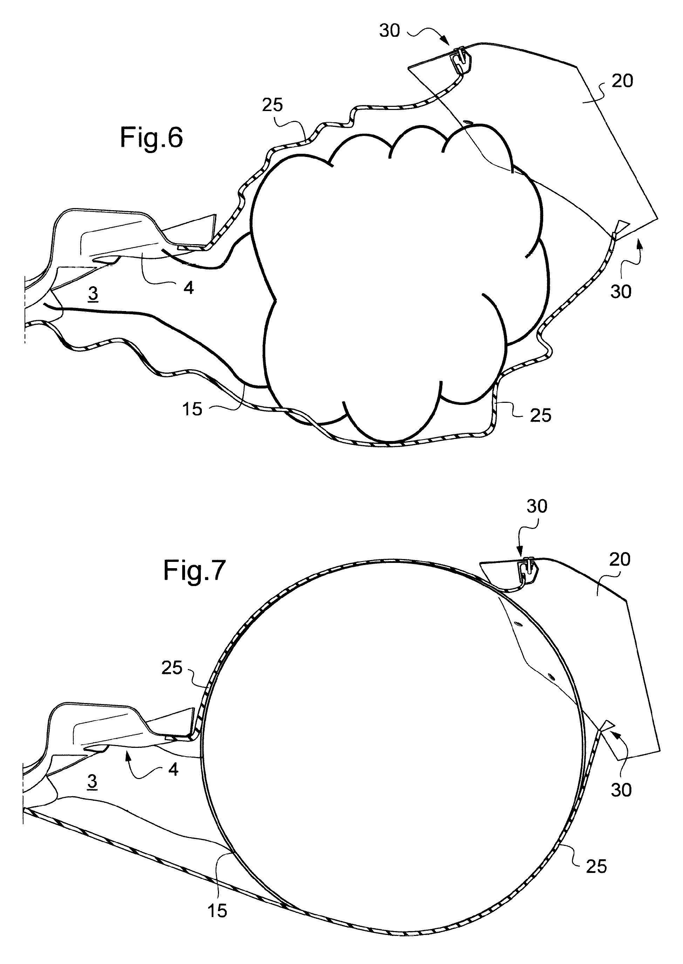

En référence à la figure 6, lorsque le flotteur est gonflé préalablement à un amerrissage, ce flotteur exerce un effort sur le capot.

L'organe de fixation 45 fusible est alors rompu. Par suite, le capot peut s'éloigner du compartiment 3. Cependant, ce capot demeure attaché au fuselage par les moyens de liaison 25.

A l'issue du gonflage, les moyens de liaison sont tendus. Le capot reste en outre accroché à l'aéronef, via les moyens de liaison 25 selon le premier mode de réalisation ou via les moyens de liaison 25 et le flotteur 15 selon le deuxième mode de réalisation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé d'agencement d'un système de flottabilité (10) sur un aéronef (1), ledit système de flottabilité (10) comprenant un flotteur (15) gonflable et un capot (20),
**caractérisé en ce qu'**on relie ledit capot (20) à un compartiment (3) dudit aéronef (1) par au moins un moyen de liaison (25) extensible pour permettre la retenue et le déplacement transversal du capot (20) lors du gonflement du flotteur (15).

2. Procédé selon la revendication 1,
**caractérisé en ce qu'**on fixe ledit capot (20) à chaque moyen de liaison (25) par un moyen de fixation (30) réversible.

3. Procédé selon l'une quelconque des revendications 1 à 2,
**caractérisé en ce qu'**on relie ledit capot (20) au compartiment (3) par lesdits moyens de liaison (25).

4. Procédé selon l'une quelconque des revendications 1 à 2,
**caractérisé en ce qu'**on relie ledit capot (20) au compartiment (3) avec lesdits moyens de liaison (25) et le flotteur (15), ledit flotteur étant fixé à au moins une paroi interne (4) délimitant ledit compartiment (3), ledit capot (20) étant fixé au flotteur (15) via lesdits moyens de liaison (25).

5. Procédé selon l'une quelconque des revendications 1 à 4,
**caractérisé en ce que** ledit flotteur (15) présentant une fois gonflé une zone inférieure (ZINF) susceptible d'impacter une surface liquide (100) et une zone supérieure (ZSUP) qui n'est pas susceptible d'impacter ladite surface liquide (100), ledit capot (20) est agencé en vis-à-vis de ladite zone supérieure (ZSUP).

6. Système de flottabilité (10) pour un aéronef (1), ledit système de flottabilité (10) comprenant un flotteur (15) gonflable et un capot (20),
**caractérisé en ce que** ledit système de flottabilité (10) inclut au moins deux moyens de liaison (25) extensibles fixés au capot (20) pour relier le capot (20) à un compartiment (3) d'un aéronef (1) en permettant la retenue et le déplacement transversal du capot (20) lors du gonflement du flotteur (15).

7. Système selon la revendication 6
**caractérisé en ce que** ledit système de flottabilité (10) comporte un moyen de fixation (30) réversible par moyen de liaison (25) pour fixer de manière réversible chaque moyen de liaison (25) au capot (20).

8. Système selon la revendication 7,
**caractérisé en ce que** ledit moyen de fixation (30) comporte une cornière (35) d'une part fixée au capot (20) par un moyen d'encastrement (40) réversible, et d'autre part fixée à un moyen de liaison (25).

9. Système selon l'une quelconque des revendications 7 à 8,
**caractérisé en ce que** ledit moyen de fixation (30) comporte un organe de fixation (45) fusible pour fixer le capot (20) à un compartiment (3).

10. Système selon l'une quelconque des revendications 6 à 9,
**caractérisé en ce que** chaque moyen de liaison (25) comporte un dispositif de fixation (50) pour être fixé à un compartiment (3) d'un aéronef (1).

11. Système selon l'une quelconque des revendications 6 à 9,
**caractérisé en ce que** chaque moyen de liaison (25) comporte un système de fixation (60) au flotteur (15).

12. Système selon l'une quelconque des revendications 6 à 11,
**caractérisé en ce que** ledit flotteur (15) comporte un dispositif de liaison (70) à un compartiment (3) d'un aéronef (1).

13. Aéronef (1) muni d'un compartiment (3) et d'un système de flottabilité (10), ledit aéronef (1) comprenant au moins un flotteur (15) gonflable agencé dans ledit compartiment (3) et un capot (20) obturant ledit compartiment (3),
**caractérisé en ce que** ledit système de flottabilité (10) est selon l'une quelconque des revendications 6 à 12, ledit système de flottabilité (10) incluant au moins un moyen de liaison (25) extensible fixé au capot pour relier ce capot audit compartiment (3) en permettant la retenue et le déplacement transversal du capot lors du gonflement du flotteur (15).

## Patentansprüche

1. Verfahren zur Anbringung eines Schwimmersystems (10) an einem Flugzeug (1), wobei das Schwimmersystem (10) einen aufblasbaren Schwimmer (15) und eine Haube (20) aufweist,
**dadurch gekennzeichnet, dass** die Haube (20) an einer Kammer (3) des Flugzeugs (1) mit mindestens einem dehnbaren Befestigungsmittel (25) befestigt wird, um die Halterung und die senkrechte Bewegung der Haube (20) während des Aufblasens des Schwimmers (15) zu erlauben.

2. Verfahren nach Anspruch 1,
**dadurch gekennzeichnet, dass** die Haube (20) an jedem Verbindungsmittel (25) mit einem reversiblen Befestigungsmittel (30) befestigt wird.

3. Verfahren nach einem der Ansprüche 1 bis 2,
**dadurch gekennzeichnet, dass** die Haube (20) über die Verbindungsmittel (25) mit der Kammer (3) verbunden wird.

4. Verfahren nach einem der Ansprüche 1 bis 2,
**dadurch gekennzeichnet, dass** die Haube (20) mit den Verbindungsmitteln (25) und dem Schwimmer (15) mit der Kammer (3) verbunden wird, wobei der Schwimmer an mindestens einer Innenwand (4), die die Kammer (3) begrenzt, befestigt ist, wobei die Haube (20) über die Verbindungsmittel (25) an dem Schwimmer (15) befestigt ist.

5. Verfahren nach einem der Ansprüche 1 bis 4,
**dadurch gekennzeichnet, dass** der Schwimmer (15) im aufgeblasenen Zustand einen unteren Bereich (ZINF) aufweist, der auf eine Flüssigkeitsfläche (100) auftreffen kann, und einen oberen Bereich (ZSUP), der nicht geeignet ist, auf die Flüssigkeitsoberfläche (100) zu treffen, wobei die Haube (20) gegenüber dem oberen Bereich (ZSUP) angeordnet ist.

6. Schwimmersystem (10) für ein Flugzeug (1), wobei das Schwimmersystem (10) einen aufblasbaren Schwimmer (15) und eine Haube (20) aufweist,
**dadurch gekennzeichnet, dass** das Schwimmersystem (10) mindestens zwei dehnbare Verbindungsmittel (25) umfasst, die an der Haube (20) befestigt sind, um die Haube (20) mit einer Kammer (3) des Flugzeugs (1) zu verbinden, während sie die Halterung und die senkrechte Bewegung der Haube (20) während des Aufblasens des Schwimmers (15) ermöglichen.

7. System nach Anspruch 6,
**dadurch gekennzeichnet, dass** das Schwimmersystem (10) ein mittels des Verbindungsmittels (25) reversibles Befestigungsmittel (30) aufweist, um jedes Verbindungsmittel (25) an der Haube (20) reversibel zu befestigen.

8. System nach Anspruch 7,
**dadurch gekennzeichnet, dass** das Befestigungsmittel (30) eine Montageleiste (35) aufweist, die einerseits an der Haube (20) mit einem reversiblen Einbaumittel (40) und andererseits an einem Verbindungsmittel (25) befestigt ist.

9. System nach einem der Ansprüche 7 bis 8,
**dadurch gekennzeichnet, dass** das Befestigungsmittel (30) ein schmelzbares Befestigungsorgan (45) aufweist, um die Haube (20) an einer Kammer (3) zu befestigen.

10. System nach einem der Ansprüche 6 bis 9,
**dadurch gekennzeichnet, dass** jedes Verbindungsmittel (25) eine Befestigungsvorrichtung (50) aufweist, um an einer Kammer (3) eines Flugzeugs (1) befestigt zu werden.

11. System nach einem der Ansprüche 6 bis 9,
**dadurch gekennzeichnet, dass** jedes Verbindungsmittel (25) ein System (60) zur Befestigung am Schwimmer (15) aufweist.

12. System nach einem der Ansprüche 6 bis 11,
**dadurch gekennzeichnet, dass** der Schwimmer (15) eine Vorrichtung (70) zur Verbindung mit einer Kammer (3) eines Flugzeugs (1) aufweist.

13. Flugzeug (1) mit einer Kammer (3) und einem Schwimmersystem (10), wobei das Flugzeug (1) mindestens einen aufblasbaren Schwimmer (15) aufweist, der in der Kammer (3) angeordnet ist, und eine Haube (20), die die Kammer (3) verschließt,
**dadurch gekennzeichnet, dass** das Schwimmersystem (10) nach einem der Ansprüche 6 bis 12 ausgebildet ist, wobei das Schwimmersystem (10) mindestens ein dehnbares Verbindungsmittel (25) aufweist, das an der Haube befestigt ist, um diese Haube mit der Kammer (3) zu verbinden und die Halterung und die senkrechte Bewegung der Haube während des Aufblasens des Schwimmers (15) zu erlauben.

## Claims

1. Method of arranging a floatation system (10) on an aircraft (1), said floatation system (10) comprising an inflatable float (15) and a cover (20),
**characterised in that** said cover (20) is connected to a compartment (3) of said aircraft (1) by at least one extensible connection means (25) in order to enable the cover (20) to be retained and to be moved transversely during inflation of the float (15).

2. Method according to claim 1,
**characterised in that** said cover (20) is fastened to each connection means (25) by a reversible fastening means (30).

3. Method according to any one of claims 1 to 2,
**characterised in that** said cover (20) is connected to the compartment (3) by said connection means (25).

4. Method according to any one of claims 1 to 2,
**characterised in that** said cover (20) is connected to the compartment (3) with said connection means (25) and the float (15), said float being fastened to at least one internal wall (4) defining said compartment (3), said cover (20) being fastened to the float (15) via said connection means (25).

5. Method according to any one of claims 1 to 4,
**characterised in that** said float (15), once inflated, has a bottom zone (ZINF) capable of impacting a liquid surface (100) and a top zone (ZSUP) which is not capable of impacting said liquid surface (100), said cover (20) being arranged facing said top zone (ZSUP).

6. Floatation system (10) for an aircraft (1), said floatation system (10) comprising an inflatable float (15) and a cover (20),
**characterised in that** said floatation system (10) includes at least two extensible connection means (25) fastened to the cover (20) to connect the cover (20) to a compartment (3) of an aircraft (1), while enabling the cover (20) to be retained and to be moved transversely during inflation of the float (15).

7. System according to claim 6,
**characterised in that** said floatation system (10) comprises one reversible fastening means (30) per connection means (25) in order to fasten each connection means (25) reversibly to the cover (20).

8. System according to claim 7,
**characterised in that** said fastening means (30) comprises an angle bracket (35) fastened on one side to the cover (20) by a reversible fixing means (40), and fastened on the other side to a connection means (25).

9. System according to any one of claims 7 to 8,
**characterised in that** said fastening means (30) comprises a fusible fastening member (45) for fastening the cover (20) to a compartment (3).

10. System according to any one of claims 6 to 9,
**characterised in that** each connection means (25) comprises a fastening device (50) for being fastened to a compartment (3) of an aircraft (1).

11. System according to any one of claims 6 to 9,
**characterised in that** each connection means (25) comprises a fastening system (60) for fastening to the float (15).

12. System according to any one of claims 6 to 11,
**characterised in that** said float (15) comprises a connection device (70) for connection to a compartment (3) of an aircraft (1).

13. Aircraft (1) provided with a compartment (3) and a floatation system (10), said aircraft (1) comprising at least one inflatable float (15) arranged in said compartment (3) and a cover (20) closing said compartment (3),
**characterised in that** said floatation system (10) is a system according to any one of claims 6 to 12, said floatation system (10) including at least one extensible connection means (25) fastened to the cover in order to connect the cover to said compartment (3), while enabling the cover to be retained and to be moved transversely during inflation of the float (15).
